# FASCICULE DE BREVET EUROPEEN

(11) **EP 3 290 133 B1**
(45) Date de publication et mention de la délivrance du brevet: **10.07.2019**
(21) Numéro de dépôt: 17186477.0
(22) Date de dépôt: 16.08.2017
(51) Int. Cl.: B22F 3/02, B22F 3/00, B30B 15/34, B30B 15/02, B22F 5/00, F01D 11/12, B22F 3/12

(54) **PROCEDE DE REALISATION D'UN JOINT ABRADABLE DE TURBOMACHINE**
HERSTELLUNGSVERFAHREN EINER ABRIEBDICHTUNG FÜR STRÖMUNGSMASCHINE
METHOD FOR PRODUCING AN ABRADABLE TURBOMACHINE SEAL

(30) Priorité: 31.08.2016 BE 201605670
(43) Date de publication de la demande: 07.03.2018
(73) Titulaire: Safran Aero Boosters SA, 4041 Herstal (BE)
(72) Inventeur: DETRY, Brigitte, 5000 Namur (BE)
(74) Mandataire: Lecomte & Partners

(56) Documents cités:
- EP-A1- 2 842 666
- FR-A1- 2 993 577
- NISHIDA T ET AL: "Preparation and characterization of polycrystalline alumina with small grain size", JOURNAL OF THE EUROPEAN CERAMIC SOCIETY, ELSEVIER SCIENCE PUBLISHERS, BARKING, ESSEX, GB, vol. 12, no. 3, 1 janvier 1993 (1993-01-01), pages 197-203, XP024175424, ISSN: 0955-2219, DOI: 10.1016/0955-2219(93)90121-7 [extrait le 1993-01-01]
- TAKEKAWA JUNJIRO ET AL: "Effect of sintering atmospheres on the sinterability of metal injection molded compact", FUNTAI OYOBI FUMMATSU YAKIN/JOURNAL OF THE JAPAN SOCIETY OF POWDER AND POWDER METALLURGY 1994 FEB, vol. 41, no. 2, février 1994 (1994-02), pages 141-145, XP002770336,

## Description

### Domaine technique

L'invention concerne la réalisation de joints abradables pour une turbomachine. L'invention a également trait à un procédé de fabrication d'une turbomachine, notamment d'un turboréacteur d'avion ou d'un turbopropulseur d'aéronef, avec un joint abradable.

### Technique antérieure

Il est connu d'utiliser un matériau abradable, également appelé matériau friable, afin d'assurer une étanchéité dynamique dans une turbomachine, en particulier dans un compresseur de turboréacteur d'avion. Un tel matériau forme la surface interne d'un carter externe qu'il tapisse, et s'effrite en cas de contact avec des extrémités d'aubes rotoriques. Ce matériau abradable est adapté pour limiter l'usure des extrémités des aubes malgré leur vitesse de rotation, vitesse de rotation pouvant dépasser les 8000 tr/minutes. En outre, la vitesse relative entre une extrémité d'aube rotorique et son joint d'étanchéité s'approche de la vitesse du son.

Ainsi, il est possible de concevoir un compresseur tout en réduisant le jeu mécanique entre les extrémités d'aubes rotoriques et la surface interne du carter. L'optimisation peut également prendre en compte la dilatation, la force centrifuge ; et certains aléas de fonctionnement comme les ingestions et les phénomènes de pompage. Un matériau abradable formant un revêtement de carter comprend généralement de l'aluminium, de la silice, du polyester. Le procédé de réalisation du joint permet d'optimiser le comportement et les performances du joint. Une application à une virole interne coopérant avec des léchettes reste également dans le domaine du possible.

Il est à noter que l'expression de langue anglaise « abradable » est communément utilisée pour désigner un matériau friable apte à assurer une certaine étanchéité avec une surface mobile par rapport à ce matériau. Ce matériau peut présenter diverses compositions, structures et formes. A titre d'exemple, une virole externe de compresseur de turbomachine axiale, pourvue d'une couche de ce matériau permet d'assurer une étanchéité tournante avec les extrémités des aubes rotoriques dudit compresseur. Cela permet de conserver l'intégrité de l'ensemble et ce malgré les déformations, mêmes légères, inhérentes à la turbomachine, notamment des déformations en élongation des aubes ou de leur support en raison des forces centrifuges. En réduisant au mieux le jeu entre les aubes mobiles et le carter de la veine fluide, on augmente ainsi l'efficacité et le rendement du turboréacteur.

Le document FR 2 993 577 A1 divulgue un procédé de réalisation d'un revêtement abradable résistant à la corrosion. Le revêtement forme une portion d'usure collée à la structure d'une turbomachine. Le revêtement comporte une matrice à base polyester et une charge d'alliage d'aluminium. Le revêtement est produit en plaques par moulage à chaud. Or, la résistance des plaques en question reste limitée.

### Résumé de l'invention

### Problème technique

L'invention a pour objectif de limiter l'adhésion avec le moule, et donc de permettre un meilleur démoulage de celui-ci. Cette invention a aussi pour objectif d'améliorer la qualité d'un joint abradable de turbomachine. L'invention a également pour objectif d'augmenter la résistance du joint abradable.

### Solution technique

L'invention a pour objet un procédé de réalisation d'un joint d'étanchéité pour turbomachine dans un moule, notamment d'un joint abradable pour turbomachine, le joint d'étanchéité étant notamment apte à s'effriter au contact d'un rotor de turbomachine, caractérisé en ce que le procédé comprend les étapes suivantes : (a) préchauffage du moule ; puis (b) remplissage du moule avec un mélange, notamment un mélange poudreux ; (d) compactage du mélange dans le moule de sorte à solidifier le mélange dans le moule.

Durant l'étape (a) de préchauffage, la surface interne de la cavité du moule destinée à recevoir le mélange est recouverte d'une feuille d'aluminium.

Selon un mode avantageux de l'invention, l'étape (a) préchauffage du moule comprend le chauffage du moule au moins à 300°C, ou au moins à 400° C, ou au moins à 500°C.

Selon un mode avantageux de l'invention, l'étape (a) préchauffage du moule comprend le chauffage du moule pendant au moins 2 heures, ou au moins 3 heures.

Selon un mode avantageux de l'invention, à l'étape (b) remplissage le mélange comprend une charge, et une matrice dont la masse représente entre 5% et 50% de la masse du mélange.

Selon un mode avantageux de l'invention, la charge comprend entre 20% et 45% massique de nickel.

Selon un mode avantageux de l'invention, la charge comprend entre 5% et 20% massique de silicium.

Selon un mode avantageux de l'invention, la charge comprend entre 55% et 80% massique d'aluminium.

Selon un mode avantageux de l'invention, la matrice comprend du nitrure de bore hexagonal, ou du fluorure de calcium, ou un polymère tel du polyester.

Selon un mode avantageux de l'invention, le procédé comprend en outre une étape (c) dégazage du mélange dans le moule, qui est effectuée avant l'étape (d) compactage.

Selon un mode avantageux de l'invention, l'étape (c) dégazage comprend au moins un cycle d'application d'un effort de compression sur le mélange dans le moule puis un relâchement dudit effort de compression, éventuellement l'étape (c) dégazage comprend au moins trois cycles.

Selon un mode avantageux de l'invention, lors d'au moins un ou de chaque cycle, l'effort de compression est maintenu entre 1 seconde et 5 minutes, ou entre 5 secondes et 1 minute, ou entre 10 secondes et 30 secondes.

Selon un mode avantageux de l'invention, l'étape (d) compactage est effectuée à température ambiante.

Selon un mode avantageux de l'invention, l'étape (d) compactage est effectuée au plus 15 minutes, ou au plus 5 minutes, ou au plus 1 minute après l'étape (a) préchauffage.

Selon un mode avantageux de l'invention, lors de l'étape (d) compactage, une pression de 10 MPa à 20 MPa, ou d'au moins 15 MPa est appliquée au mélange.

Selon un mode avantageux de l'invention, lors de l'étape (d) compactage, un effort de compression est appliqué pendant 30 minutes à 90 minutes, éventuellement pendant 60 minutes, sur le mélange.

Selon un mode avantageux de l'invention, le moule comprend un réceptacle et un piston compactant le mélange dans le réceptacle pendant l'étape (d) compactage, et éventuellement pendant l'étape (c) dégazage.

Selon un mode avantageux de l'invention, la capacité thermique du moule est supérieure ou égale au double de la capacité thermique du mélange contenu dans le moule.

Selon un mode avantageux de l'invention, la capacité thermique du moule est supérieure ou égale à trois, ou à cinq, ou à sept, ou à dix fois la capacité thermique du mélange contenu dans le moule.

Selon un mode avantageux de l'invention, la masse du moule est supérieure ou égale à cinq fois, ou à dix fois la masse du mélange.

Selon un mode avantageux de l'invention, le moule est en métal, notamment en acier, par exemple en acier inoxydable.

Selon un mode avantageux de l'invention, la charge comprend du nickel et/ou du silicium et/ou de l'aluminium.

Selon un mode avantageux de l'invention, l'effort de compression pendant l'étape (c) dégazage est configuré pour exercer une pression d'au moins 15 MPa sur le mélange.

Selon un mode avantageux de l'invention, lors d'au moins un ou de chaque cycle, le relâchement de l'effort de compression dure entre 1 seconde et 5 minutes, ou entre 5 secondes et 1 minute, ou entre 10 secondes et 30 secondes.

Selon un mode avantageux de l'invention, à l'issue de l'étape (d) compactage, le joint abradable solidifié forme un segment angulaire d'un anneau.

L'invention a également pour objet un procédé de fabrication d'une turbomachine comprenant un joint d'étanchéité, notamment un joint d'étanchéité abradable de turbomachine tel un turboréacteur, caractérisé en ce que le procédé de fabrication comprend les étapes suivantes : (a) préchauffage du moule, où la surface interne de la cavité du moule destinée à recevoir le mélange est recouverte d'une feuille d'aluminium; puis (b) remplissage du moule avec un mélange, notamment un mélange poudreux ; (d) compactage du mélange dans le moule de sorte à solidifier le mélange dans le moule ; (iii) le montage d'un rotor de la turbomachine au niveau du joint d'étanchéité ; éventuellement la turbomachine comprenant un compresseur basse-pression, le joint d'étanchéité étant un joint dudit compresseur basse-pression.

Selon un mode avantageux de l'invention, le procédé de fabrication comprend une étape (i) fourniture ou réalisation d'un support, et une étape (ii) fixation sur le support du joint abradable issu du procédé de réalisation.

Selon un mode avantageux de l'invention, l'étape (ii) fixation comprend un collage, ou un soudage, ou un rivetage.

Selon un mode avantageux de l'invention, à l'étape (iii) montage le joint entoure le rotor, et/ou le joint et le rotor sont en contact.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

L'invention augmente la résistance du joint abradable en cas de contact avec le rotor. En particulier, la résistance mécanique et la résistance à la corrosion sont améliorées. Le joint devient plus durable, ce qui optimise la sécurité de la turbomachine. En particulier, le joint obtenu montre une durabilité optimale dans le contexte d'un compresseur basse pression de turboréacteur dont la température de fonctionnement est comprise entre -50°C et +50°C, et qui reste vers -50°C en vol de croisière. Par ailleurs, le joint abradable permet de répondre aux critères d'une ingestion en présence d'aubes en titane, par exemple sur un rotor monobloc.

Le procédé selon l'invention offre un matériau final plus homogène à l'échelle granulaire. La charge pénètre mieux la matrice. La tendance des grains de la matrice à s'agglutiner diminue, tout comme les grains de la charge. En parallèle, l'invention peut permettre de mieux encapsuler les grains de la charge. Par exemple, les grains métalliques sont davantage encapsulés, ce qui améliore la résistance à la corrosion. De plus, l'utilisation d'un voile en aluminum disposé entre la cavité du moule et le mélange permet de limiter l'adhésion entre le moule et le mélange, simplifiant ainsi le démoulage du joint d'étanchéité.

### Brève description des dessins

La figure 1 représente une turbomachine axiale selon l'invention.
La figure 2 esquisse une portion de la turbomachine de la figure 1.
La figure 3 illustre un moule utilisé pour le compactage à chaud d'un joint abradable selon l'invention.
La figure 4 est un diagramme du procédé de réalisation d'un joint abradable dans un moule selon l'invention.
La figure 5 est un diagramme du procédé de fabrication d'une turbomachine selon l'invention.

### Description des modes de réalisation

Dans la description qui va suivre, les termes interne et externe renvoient à un positionnement par rapport à l'axe de rotation d'une turbomachine axiale.

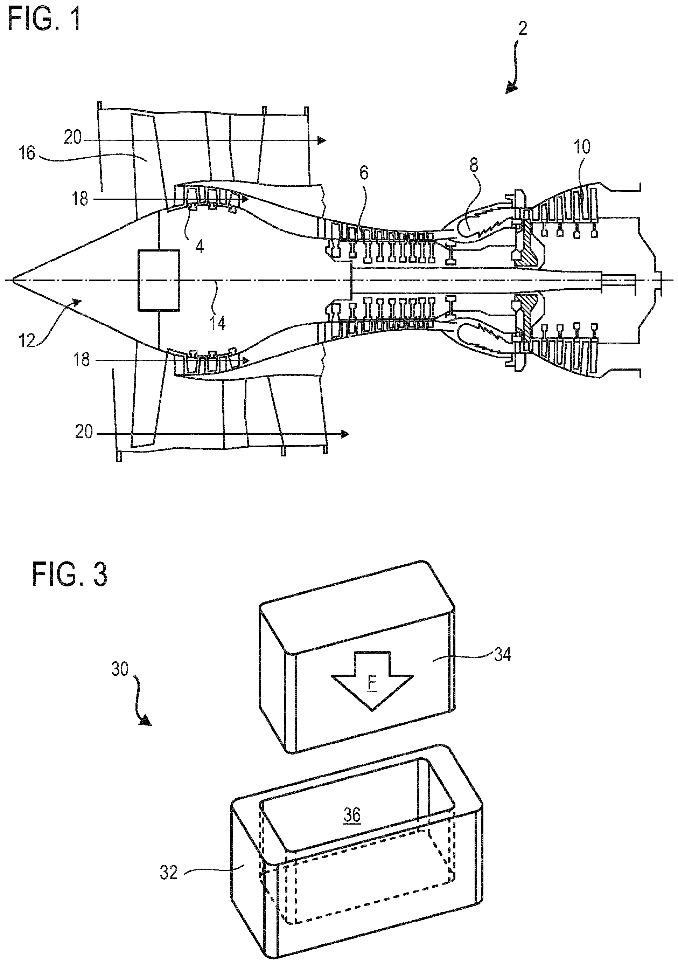

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor 12 autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée utile pour le vol d'un avion.

Autour de la soufflante 16 comme autour des aubes rotoriques de compresseur ou de turbine, la turbomachine présente plusieurs joints abradables annulaires d'étanchéité. Ces joints abradables d'étanchéité sont adaptés pour coopérer par abrasion avec les extrémités radiales des aubes, respectivement de la soufflante, en s'effritant de sorte à limiter l'usure et la dégradation desdites extrémités. Les joints d'étanchéité peuvent s'éroder. Ils peuvent se dégrader sous la forme de poudre en cas de contact avec le rotor de la turbomachine. Grâce à cette sécurité, il devient possible de réduire les jeux radiaux de sécurité entre les aubes et leurs joints, et donc d'amoindrir les recirculations. Dès lors, le rendement augmente.

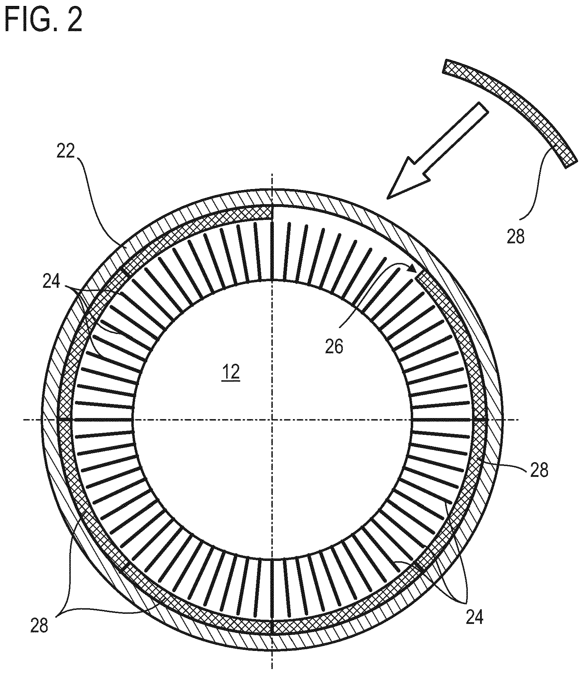

La figure 2 est une vue en coupe d'une portion de la turbomachine présentée en relation avec la figure 1. En l'occurrence, il peut s'agir d'une portion de compresseur, éventuellement du compresseur basse pression. Le présent enseignement peut également s'appliquer au compresseur haute pression tout comme à la soufflante.

Le rotor 12 s'entoure d'un carter 22 du stator. Il comprend une rangée annulaire d'aubes rotoriques 24 s'étendant radialement jusqu'au niveau de la surface interne du carter 22. Cette surface interne est tapissée par un joint abradable annulaire 26 qui ceinture la rangée d'aubes rotoriques 24. La proximité radiale entre le joint 26 et les aubes 24 permet une étanchéité dynamique.

La figure 2 présente également une étape du procédé de fabrication de la turbomachine où un segment angulaire 28 est fixé à l'intérieur du carter 22. En l'occurrence, le joint abradable 26 segmenté est formé de huit segments 28, chacun d'eux présentant une forme de plaque cintrée ; ou encore une forme de tuile. Chaque segment 28 peut présenter une double courbure. A titre d'exemple, la longueur développée du segment est comprise entre 20cm et 40cm, éventuellement entre 25cm et 35cm inclus. La largeur peut être comprise entre 5cm et 15cm inclus.

La figure 3 esquisse le moule 30 employé pour réaliser le joint abradable, notamment par exemple sous la forme de segments angulaires.

Le moule 30 comporte un réceptacle 32 et un piston 34 qui est de forme complémentaire à la cavité interne 36 du réceptacle 32. Pour réaliser un segment de joint abradable, un mélange précurseur (non représenté) est mis en oeuvre dans la cavité interne 36, puis le moule 30 est refermé en introduisant le piston 34 dans la cavité interne 36.

Afin de limiter l'adhésion avec le moule et donc de simplifier le démoulage, la face inférieure du piston 34, comme la surface interne qui définit la cavité interne 36, sont recouverts d'un voile en aluminium (non représenté).

Le moule peut être métallique, notamment en acier inoxydable. Sa masse et sa capacité thermique permettent une accumulation de calories, puis un échange de calories avec le mélange.

Le piston 34 est introduit avec un effort F vertical de sorte à exercer une pression prédéterminée pendant un temps voulu sur le mélange. Par un phénomène thermique et/ou physicochimique le mélange durci, si bien qu'un solide est produit. Le segment de joint se matérialise.

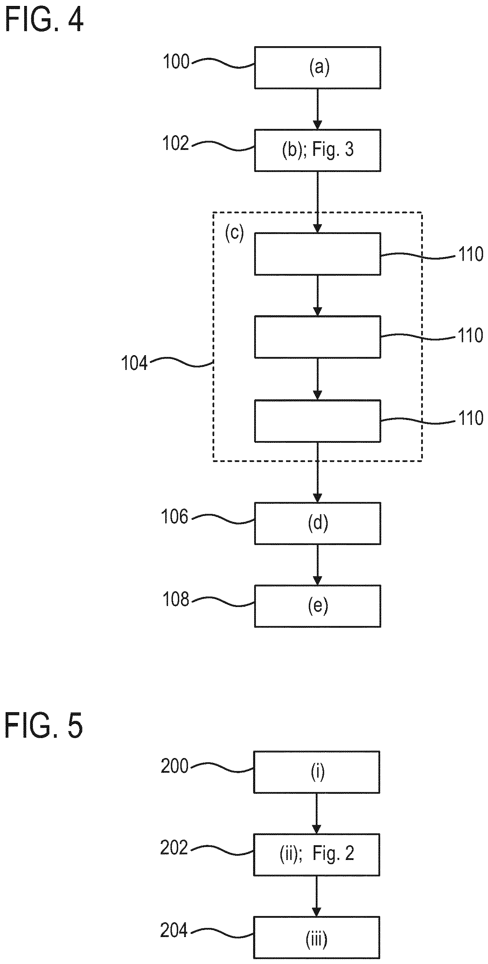

La figure 4 présente le procédé de réalisation d'un joint abradable dans un moule. Le moule peut correspondre à celui présenté en figure 3, et le joint abradable peut correspondre à celui illustré en relation avec les figures 1 et 2.

Le procédé peut comprendre les étapes suivantes ; éventuellement réalisées dans l'ordre qui suit :
(a) préchauffage 100 du moule ;
(b) remplissage 102 du moule avec un mélange, notamment un mélange poudreux ;
(c) dégazage 104 du mélange dans le moule ;
(d) compactage 106 du mélange dans le moule encore chaud, de sorte à solidifier le mélange dans le moule, notamment de manière à former un segment angulaire de joint abradable ;
(e) démoulage 108 du segment angulaire de joint abradable.

L'étape (a) préchauffage 100 du moule comprend le préchauffage du moule à au moins 500°C pendant 3 heures, ce qui permet de s'assurer de la montée en température du moule, et qu'il accumule des calories utiles ultérieurement. Ce chauffage peut être réalisé dans un four. A l'issue de cette étape, le moule peut atteindre 500°C.

A l'étape (b) remplissage 102 le mélange précurseur peut être sous forme d'une poudre, ou d'un mélange de poudres. Le mélange peut comprendre une charge et une matrice. A titre d'exemple, il peut comprendre une charge métallique, et/ou une matrice polymère. La matrice peut représenter entre 5% et 50% de la masse du mélange, le reste étant formé par la charge. La matrice peut comporter du polyester, et/ou du nitrure de bore hexagonal, et/ou du fluorure de calcium.

La charge peut comporter, en masse, de 20% à 45% de nickel. La charge peut comporter en masse de 5% à 20% de silicium. La charge peut comporter en masse de 55% à 80% d'aluminium. Dans l'invention, les intervalles incluent leurs bornes. D'autres métaux peuvent être employés dans l'optique d'améliorer la résistance mécanique et la tenue à la corrosion.

Grâce à sa masse et à son matériau, le moule peut présenter une capacité thermique supérieure ou égale à quinze fois la capacité thermique du mélange contenu dans le moule. Il est donc apte à effectuer un échange de chaleur important avec le mélange qu'il renferme. Sa température peut rester supérieure à 100°C pendant au moins une heure, ou du moins pendant l'étape (d) compactage 106.

L'étape (c) dégazage 104 comprend trois cycles 110 de dégazage. Chaque cycle 110 comporte l'application d'un effort de compression sur le mélange dans le moule puis un relâchement dudit effort de compression. Lors des cycles, l'effort de compression est maintenu entre 1 seconde et 10 minutes inclus. L'effort de compression peut permettre d'appliquer une contrainte de compression verticale de 15 MPa sur le mélange. Le relâchement de l'effort de compression peut durer entre 1 seconde et 10 minutes inclus. L'étape (c) dégazage 104 reste optionnelle. Elle permet d'augmenter la densité du joint abradable, et donc d'atteindre certaines performances prédéterminées.

L'étape (d) compactage 106 est effectuée à température ambiante, c'est-à-dire entre 20°C et 25°C, et éventuellement à l'air ambiant par économie. Elle est réalisée au plus tôt après l'étape (b) remplissage 102, et éventuellement après l'optionnelle étape (c) dégazage 104, notamment pour limiter le refroidissement du moule avec l'air ambiant. L'étape (d) compactage 106 peut débuter moins de 10 minutes, ou mois de 3 minutes, ou moins de 20 secondes après l'étape (a) préchauffage 100. A nouveau, une pression verticale est appliquée au mélange via le piston. Une pression de 1 MPa à 50 MPa, peut être exercée. La pression statique de compactage peut être égale à 15 MPa. Cette pression peut être maintenue en continu pendant 1 heure.

Puisque le moule reste chaud suite à son préchauffage, l'étape (d) compactage 106 permet un compactage à chaud du mélange, et donc un durcissement thermique du mélange qui s'agglomère. Le moule restitue sa chaleur stockée au mélange. La température du moule diminue progressivement tandis que celle du mélange augmente, puis se maintient à celle du moule. Grâce à l'invention, les moyens de chauffage peuvent rester simples, notamment de taille réduite. En outre, l'invention requiert d'autres moyens pour appliquer l'effort de compactage qui restent simples et économes. Les moyens de commande et d'actionnement le sont également. Les contraintes de température et d'encombrement demeurent aisées à traiter.

L'étape (d) compactage peut être une étape de frittage. Les étapes précitées peuvent être adaptées de sorte à former un procédé de moulage.

La figure 5 est un diagramme du procédé de réalisation d'une turbomachine pouvant correspondre à celle détaillée dans la figure 1. Le joint abradable, ou du moins le segment peut être produit selon le procédé décrit en figure 4.

Le procédé de réalisation de la turbomachine peut comprendre les étapes suivantes :
(i) fourniture ou réalisation 200 d'un support, notamment d'un carter de turbomachine,
(ii) collage 202 à l'intérieur du support du joint abradable issu du procédé de réalisation détaillé en figure 4,
(iii) montage 204 ou mise en place d'un rotor axialement au niveau du joint.

L'étape (ii) collage 202 est répétée de sorte à ce que les segments annulaires décrivent une boucle fermée. Le procédé de collage est intéressant dans le contexte d'un carter en matériau composite à matrice organique et à renfort fibreux. La figure 2 peut correspondre à cette étape (ii) collage 202, toutefois la présence des aubes et du rotor reste optionnelle pour son exécution. A l'issue du procédé

A l'étape (iii) montage 204 le joint et le rotor peuvent assurer une étanchéité dynamique. Ils peuvent s'effleurer, par exemple circulairement. Le joint peut entourer le rotor.

## Revendications

1. Procédé de réalisation d'un joint d'étanchéité (26) pour turbomachine dans un moule (30), notamment d'un joint abradable (26) pour turbomachine (2), le joint d'étanchéité (26) étant notamment apte à s'effriter au contact d'un rotor de turbomachine, **caractérisé en ce que** le procédé comprend les étapes suivantes :
(a) préchauffage (100) du moule (30) ; puis
(b) remplissage (102) du moule (30) avec un mélange, notamment un mélange poudreux ;
(d) compactage (106) du mélange dans le moule (30) de sorte à solidifier le mélange dans le moule (30),
procédé dans lequel à l'étape (a) préchauffage (100), la surface interne de la cavité du moule (30) destinée à recevoir le mélange est recouverte d'une feuille d'aluminium.

2. Procédé de réalisation selon la revendication 1, **caractérisé en ce que** l'étape (a) préchauffage (100) du moule (30) comprend le chauffage du moule (30) au moins à 300°C, ou au moins à 400°C, ou au moins à 500°C.

3. Procédé de réalisation selon l'une des revendications 1 à 2, **caractérisé en ce que** l'étape (a) préchauffage (100) du moule (30) comprend le chauffage du moule (30) pendant au moins 2 heures, ou au moins 3 heures.

4. Procédé de réalisation selon l'une des revendications 1 à 3, **caractérisé en ce qu'**à l'étape (b) remplissage (102) le mélange comprend une charge, et une matrice dont la masse représente entre 5% et 50% de la masse du mélange.

5. Procédé de réalisation selon la revendication 4, **caractérisé en ce que** la charge comprend entre 20% et 45% massique de nickel.

6. Procédé de réalisation selon l'une des revendications 4 à 5, **caractérisé en ce que** la charge comprend entre 5% et 20% massique de silicium.

7. Procédé de réalisation selon l'une des revendications 4 à 6, **caractérisé en ce que** la charge comprend entre 55% et 80% massique d'aluminium.

8. Procédé de réalisation selon l'une des revendications 4 à 7, **caractérisé en ce que** la matrice comprend du nitrure de bore hexagonal, ou du fluorure de calcium, ou un polymère tel du polyester.

9. Procédé de réalisation selon l'une des revendications 1 à 8, **caractérisé en ce que** le procédé comprend en outre une étape (c) dégazage (104) du mélange dans le moule (30), qui est effectuée avant l'étape (d) compactage (106), l'étape (c) dégazage (104) comprenant au moins un cycle (110) d'application d'un effort de compression sur le mélange dans le moule (30) puis un relâchement dudit effort de compression, lors d'au moins un ou de chaque cycle (110), l'effort de compression est maintenu entre 1 seconde et 5 minutes, ou entre 5 secondes et 1 minute, ou entre 10 secondes et 30 secondes.

10. Procédé de réalisation selon l'une des revendications 1 à 9, **caractérisé en ce que** lors de l'étape (d) compactage (106), une pression de 10 MPa à 20 MPa, ou d'au moins 15 MPa est appliquée au mélange.

11. Procédé de réalisation selon l'une des revendications 1 à 10, **caractérisé en ce que** lors de l'étape (d) compactage (106), un effort de compression est appliqué pendant 30 minutes à 90 minutes, éventuellement pendant 60 minutes, sur le mélange.

12. Procédé de réalisation selon l'une des revendications 1 à 11, **caractérisé en ce que** la capacité thermique du moule (30) est supérieure ou égale au double de la capacité thermique du mélange contenu dans le moule (30).

13. Procédé de fabrication d'une turbomachine (2) comprenant un joint d'étanchéité (26), le procédé de fabrication comprenant un procédé de réalisation d'un joint selon l'une des revendications 1 à 12, le procédé de fabrication comprenant en outre:
(iii) le montage (204) d'un rotor (12) de la turbomachine au niveau du joint d'étanchéité ; éventuellement la turbomachine (2) comprenant un compresseur basse-pression (4), le joint d'étanchéité (26) étant un joint dudit compresseur basse-pression (4).

14. Procédé de fabrication selon la revendication 13, **caractérisé en ce qu'**il comprend une étape (i) fourniture (200) ou réalisation d'un support, et une étape (ii) fixation (202) sur le support du joint d'étanchéité (26).

## Patentansprüche

1. Verfahren zur Herstellung einer Dichtung (26) für eine Turbomaschine in einer Form (30), insbesondere einer verschleißbaren Dichtung (26) für eine Turbomaschine (2), wobei die Dichtung (26) insbesondere dazu geeignet ist, sich im Kontakt mit dem Rotor einer Turbomaschine zu zerreiben, **gekennzeichnet dadurch, dass** das Verfahren die folgenden Schritte umfasst:
(a) Vorheizen (100) der Form (30); danach
(b) Füllen (102) der Form (30) mit einer Mischung, insbesondere einer pulverförmigen Mischung;
(d) Kompaktieren (106) der Mischung in der Form (30), um die Mischung in der Form (30) zu verfestigen,
wobei in dem Verfahren in dem Schritt (a) Vorheizen (100) die innere Oberfläche des Hohlraums der Form (30), die dazu vorgesehen ist, die Mischung aufzunehmen, mit einer Aluminiumfolie bedeckt ist.

2. Herstellungsverfahren gemäß Anspruch 1, **gekennzeichnet dadurch, dass** Schritt (a) Vorheizen (100) der Form (30) das Aufheizen der Form (30) auf zumindest 300°C oder auf zumindest 400°C oder auf zumindest 500°C umfasst.

3. Herstellungsverfahren gemäß einem der Ansprüche 1 oder 2, **gekennzeichnet dadurch, dass** Schritt (a) Vorheizen (100) der Form (30) das Heizen der Form (30) während mindestens 2 Stunden oder mindestens 3 Stunden umfasst.

4. Herstellungsverfahren gemäß einem der Ansprüche 1 oder 3, **gekennzeichnet dadurch, dass** in Schritt (b) Füllen die Mischung einen Füllstoff umfasst und eine Matrix, deren Masse zwischen 5% und 50% der Masse der Mischung darstellt.

5. Herstellungsverfahren gemäß Anspruch 4, **gekennzeichnet dadurch, dass** der Füllstoff zwischen 20 Massen% und 45 Massen% Nickel umfasst.

6. Herstellungsverfahren gemäß einem der Ansprüche 4 und 5, **gekennzeichnet dadurch, dass** der Füllstoff zwischen 5 Massen% und 20 Massen% Silizium umfasst.

7. Herstellungsverfahren gemäß einem der Ansprüche 4 bis 6, **gekennzeichnet dadurch, dass** der Füllstoff zwischen 55 Massen% und 80 Massen% Aluminium umfasst.

8. Herstellungsverfahren gemäß einem der Ansprüche 4 bis 7, **gekennzeichnet dadurch, dass** die Matrix hexagonales Bornitrid oder Calziumfluorid oder ein Polymer wie Polyester umfasst.

9. Herstellungsverfahren gemäß einem der Ansprüche 1 bis 8, **gekennzeichnet dadurch, dass** das Verfahren weiter einen Schritt (c) Entgasen (104) der Mischung in der Form (30) umfasst, der vor dem Schritt (d) Kompaktieren (106) durchgeführt wird, wobei der Schritt (c) Entgasen (104) zumindest einen Zyklus (110) der Anwendung einer Kompressionskraft auf die Mischung in der Form (30) und danach eine Lockerung der besagten Kompressionskraft umfasst, wobei die Kompressionskraft während zumindest eines Zyklus oder jedes Zyklus (110) über zwischen 1 Sekunde und 5 Minuten oder zwischen 5 Sekunden und 1 Minuten oder zwischen 10 Sekunden und 30 Sekunden aufrechterhalten wird.

10. Herstellungsverfahren gemäß einem der Ansprüche 1 bis 9, **gekennzeichnet dadurch, dass** während Schritt (d) Kompaktieren ein Druck von 10 MPa bis 20 MPa oder von zumindest 15 MPa auf die Mischung ausgeübt wird.

11. Herstellungsverfahren gemäß einem der Ansprüche 1 bis 10, **gekennzeichnet dadurch, dass** während Schritt (d) Kompaktieren eine Kompressionskraft während 30 Minuten bis 90 Minuten, möglicherweise während 60 Minuten, auf die Mischung ausgeübt wird.

12. Herstellungsverfahren gemäß einem der Ansprüche 1 bis 11, **gekennzeichnet dadurch, dass** die Wärmekapazität der Form (30) größer ist oder gleich dem Zweifachen der Wärmekapazität der in der Form (30) enthaltenen Mischung ist.

13. Verfahren der Fertigung einer Turbomaschine (2) umfassend eine Dichtung (26), wobei das Fertigungsverfahren ein Herstellungsverfahren einer Dichtung gemäß irgendeinem der Ansprüche 1 bis 12 umfasst, wobei das Fertigungsverfahren weiter umfasst:
(iii) das Montieren (204) eines Rotors (12) der Turbomaschine an dem Ort der Dichtung; wobei die Turbomaschine möglicherweise einen Niederdruckkompressor (4) umfasst und die Dichtung (26) eine Dichtung des besagten Niederdruckkompressors (4) ist.

14. Verfahren der Fertigung gemäß Anspruch 13, **gekennzeichnet dadurch, dass** es einen Schritt (i) Bereitstellung oder Herstellung einer Unterstützung umfasst und einen Schritt (ii) Befestigen (202) der Dichtung (26) auf der Unterstützung.

## Claims

1. Method for producing a seal (26) for a turbomachine (2) in a mould (30), notably a seal (26) for a turbomachine, the seal (26) being notably suitable to erode when in contact with the rotor of a turbomachine, **characterized in that** the method comprises the following steps:
(a) preheating (100) the mould (30); then
(b) filling (102) the mould (30) with a mixture, notably a powdery mixture;
(d) compacting (106) the mixture in the mould (30) so as to solidify the mixture in the mould (30),
wherein during step (a) preheating (100), the internal surface of the cavity of the mould (30) which is intended to receive the mixture is covered with an aluminium foil.

2. Production method according to claim 1, **characterized in that** step (a), preheating (100) of the mould (30), comprises the heating of the mould (30) to at least 300°C, or to at least 400°C, or to at least 500°C.

3. Production method according to one of claims 1 to 2, **characterized in that** step (a), preheating (100) of the mould (30), comprises heating the mould (30) for at least 2 hours or at least 3 hours.

4. Production method according to one of claims 1 to 3, **characterized in that** in step (b), filling (102), the mixture comprises a filler, and a matrix, the mass of which represents between 5% and 50% of the mass of the mixture.

5. Production method according to claim 4, **characterized in that** the filler comprises between 20 mass % and 45 mass % nickel.

6. Production method according to one of claims 4 and 5, **characterized in that** the filler comprises between 5 mass % and 20 mass % silicon.

7. Production method according to one of claims 4 to 6, **characterized in that** the filler comprises between 55 mass % and 80 mass % aluminium.

8. Production method according to one of claims 4 to 7, **characterized in that** the matrix comprises hexagonal boron nitride, or calcium fluoride, or a polymer such as polyester.

9. Production method according to one of claims 1 to 8, **characterized in that** the method further comprises a step (c) of degassing (104) of the mixture in the mould (30), which step is performed before step (d), compacting (106), the step (c), degassing (104), comprising at least one cycle (110) of applying a compression force to the mixture in the mould (30) then a release of said compression force, the compression force being maintained for a duration between 1 second and 5 minutes, or between 5 seconds and 1 minute, or between 10 seconds and 30 seconds.

10. Production method according to one of claims 1 to 9, **characterized in that** during step (d), compacting (106), a pressure of 10 MPa to 20 MPa or of at least 15 MPa is applied to the mixture.

11. Production method according to one of claims 1 to 10, **characterized in that** during step (d), compacting (106), a compression force is applied onto the mixture for 30 minutes to 90 minutes, potentially for 60 minutes.

12. Production method according to one of claims 1 to 11, **characterized in that** the thermal capacity of the mould (30) is greater than or equal to twice the thermal capacity of the mixture contained in the mould (30).

13. Method of manufacturing a turbomachine (2) comprising a seal (26), the method of manufacturing comprising a production method of a seal according to any of claims 1 to 12, the method of manufacturing further comprising:
(iii) mounting (204) a rotor (12) of the turbomachine at the location of the seal; possibly the turbomachine (2) comprising a low-pressure compressor (4), the seal (26) being a seal of said low-pressure compressor (4).

14. Method of manufacture according to claim 13, **characterized in that** it comprises a step (i), supplying (200) or producing a support, and a step (ii), fixing (202) of the seal (26) to the support.
